# EUROPEAN PATENT SPECIFICATION

(11) **EP 3 211 898 B1**
(45) Date of publication and mention of the grant of the patent: **03.04.2019**
(21) Application number: 17160949.8
(22) Date of filing: 29.07.2011
(51) Int. Cl.: H04N 19/159, H04N 19/117, H04N 19/176, H04N 19/82, H04N 19/593, H04N 19/61

(54) **APPARATUS FOR ENCODING AN IMAGE**
VORRICHTUNG ZUR CODIERUNG EINES BILDES
APPAREIL DE CODAGE D'UNE IMAGE

(30) Priority: 31.07.2010 KR 20100074462; 28.06.2011 KR 20110062603
(43) Date of publication of application: 30.08.2017
(62) Divisional of application: 15187283.5
(73) Proprietor: M&K Holdings Inc., Seoul 06586 (KR)
(72) Inventor: Oh, Soo Mi, 463-887 Seongnam-si Gyeonggi-do (KR); Yang, Moonock, 460405 Singapore (SG)
(74) Representative: Grünecker Patent- und Rechtsanwälte PartG mbB

(56) References cited:
- TUNG NGUYEN ET AL: "Improved Context Modeling for Coding Quantized Transform Coefficients in Video Compression", PICTURE CODING SYMPOSIUM 2010; 8-12-2010 - 10-12-2010; NAGOYA,, 8 December 2010 (2010-12-08), XP030082008,
- YEO C ET AL: "Mode-Dependent Coefficient Scanning for Intra Prediction Residual Coding", 95. MPEG MEETING; 24-1-2011 - 28-1-2011; DAEGU; (MOTION PICTURE EXPERT GROUP OR ISO/IEC JTC1/SC29/WG11),, no. m18796, 21 January 2011 (2011-01-21), XP030047366,
- KAZUO SUGIMOTO ET AL: "LUT-based adaptive filtering on intra prediction samples", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ), no. JCTVC-D109, 14 January 2011 (2011-01-14), XP030008149, ISSN: 0000-0015
- ZHENG Y ET AL: "Simplified intra smoothing", 3. JCT-VC MEETING; 94. MPEG MEETING; 7-10-2010 - 15-10-2010;GUANGZHOU; (JOINT COLLABORATIVE TEAM ON VIDEO CODING OF ISO/IECJTC1/SC29/WG11 AND ITU-T SG.16 ), no. JCTVC-C234, 2 October 2010 (2010-10-02), XP030007941, ISSN: 0000-0019

## Description

### [Technical Field]

The present invention relates to an apparatus for encoding an image, and more particularly, to an apparatus for encoding an image capable of minimize the amount of coding bits of a residual block.

### [Background Art]

In image compression methods such as Motion Picture Experts Group (MPEG)-1, MPEG-2, MPEG-4 and H.264/MPEG-4 Advanced Video Coding (AVC), one picture is divided into macroblocks (MBs) to encode an image. Then, the respective MBs are encoded using inter prediction or intra prediction.

In intra prediction, a current block of a current picture is encoded not using a reference picture, but using values of pixels spatially adjacent to the current block. An intra prediction mode with little distortion is selected by comparing a prediction block generated using the adjacent pixel values with an original MB. Then, using the selected intra prediction mode and the adjacent pixel values, prediction values of the current block are calculated. Differences between the prediction values and pixels values of the original current block are calculated and then encoded through transform coding, quantization and entropy coding. The intra prediction mode is also encoded.

Intra prediction modes are generally classified into 4×4 intra prediction mode, 8×8 intra prediction mode and 16×16 intra prediction mode for luminance components and intra prediction mode for chrominance components.

In 16×16 intra prediction mode according to a prior art, there are four modes of a vertical mode, a horizontal mode, a direct current (DC) mode and a plane mode.

In 4×4 intra prediction according to the prior art, there are nine modes of a vertical mode, a horizontal mode, a DC mode, a diagonal down-left mode, a diagonal down-right mode, a vertical right mode, a vertical left mode, a horizontal-up mode and a horizontal-down mode.

Each prediction mode has indexed according to the frequency of use of the respective modes. The vertical mode of which mode number is 0 shows the highest possibility of being used most frequently for performing intra prediction on a target block, and the horizontal-up mode of which mode number is 8 shows the highest possibility of being used most infrequently.

According to H.264 standards, a current block is encoded using a total of 13 modes, that is, 4 modes of the 4×4 intra prediction and 9 modes of the 16×16 intra prediction. A bit stream of the current block is generated according to an optimal mode among these modes.

However, when some or all values of pixels adjacent to current block do not exist or are not already encoded, it is impossible to apply some or all of the intra prediction modes to the current block. Also, when intra prediction is performed by selecting prediction mode among applicable intra mode, a residue signal between a prediction block and the current block becomes large. Therefore, the coding efficiency is degraded.

TUNG NGUYEN ET AL: "Improved Context Modeling for Coding Quantized Transform Coefficients in Video Compression", PICTURE CODING SYMPOSIUM 2010; NAGOYA, (2010-23-08), XP030082008, discloses the partitioning of transform coefficient blocks larger that 4x4 into 4x4 sub-blocks for the purpose of improved entropy coding. The sub-blocks are processed in zig-zag scan order and the coefficients of each sub-block are scanned in a reverse zig-zag scan.

YEO ET AL: "Mode-Dependent Coefficient Scanning for Intra Prediction Residual Coding", 95. MPED MEETING; DAEGU; no. ml8796, (2011-01-21), XP030047366, discloses mode-dependent scan order for intra prediction residual coding. For each Intra mode and each transform block size one of four predetermined scan orders is allocated taking into account the prediction direction.

KAZUO SUGIMOTO ET AL: "LUT-based adaptive filtering on intra prediction samples" 4. JCT-VC Meeting; 24-1-2001 - 28-1-2011; DAEGU, (JOINT COLLABORATIVE TEAM ON VIDEO CODING OF ISO/IEC JTC1/SC29/WG11 AND ITU-T SG. 16), no. JCTVC-D109, 14 January 2001 discloses adaption of filtering on intra prediction samples to improve the coding performance. In the proposed scheme, the prediction samples generated by unified intra prediction are filtered just before generating residual samples according to the prediction unit size and the intra prediction mode.

The present invention is directed to an apparatus for encoding an image similar to an original image.

One aspect of the present invention provides an apparatus including: an intra prediction unit (150) configured to generate a prediction block corresponding to a current block according to an intra prediction mode selected out of a plurality of intra prediction modes; a transform unit (120) configured to transform a residual block obtained by calculating a difference between an original block of the current block and the prediction block to generate a transform block; a quantization unit (130) configured to quantize the transform block to generate a quantized transform block using a quantization step size; a scanning unit (131) configured to scan quantized transform coefficients of the quantized transform block to generate one-dimensional (1D) quantized transform coefficients; and an entropy coding unit (140) configured to entropy-code the 1D quantized transform coefficients, wherein, when a size of the transform block is larger than 4x4, the scanning unit (131) divides the quantized transform coefficients into a plurality of sub-blocks and scans the plurality of sub-blocks and the quantized transform coefficients of each sub-block using a scan pattern determined according to the selected intra prediction mode, wherein, when the selected intra prediction mode is a horizontal mode, the scan pattern is a vertical scan, wherein information indicating a position of the last non-zero coefficient in each sub-block is transmitted to a decoder, and wherein the intra prediction unit (150) includes: a reference pixel generating unit (151) configured to generate reference pixels using available reference pixels of the current block when unavailable reference pixels exist; a reference pixel filtering unit (152) configured to adaptively filter reference pixels adjacent to the current block based on the selected
intra prediction mode and a size of the current block; a prediction block generating unit (153) configured to generate a prediction block of the current block according to the selected intra prediction mode; a prediction block filtering unit (154) configured to adaptively filter some prediction pixels of the prediction block based on the selected intra prediction mode and the size of the current block; and a prediction mode coding unit (156) configured to encode the selected intra prediction mode of the current block using an above intra prediction mode of an above block neighboring the current block and a left intra prediction mode of a left block neighboring the current block, wherein, when the above intra prediction mode or the left intra prediction mode is not available, the prediction mode coding unit set a DC mode as the above intra prediction mode or the left intra prediction mode.

One aspect provides an apparatus including: an intra prediction mode decoding unit configured to restore an intra prediction mode of a current prediction unit using additional information included in a received additional information container and available intra prediction mode candidate information of the current prediction unit; a reference pixel generating unit configured to generate reference pixels using available reference pixels; a reference pixel filtering unit configured to adaptively filter the reference pixels based on the restored intra prediction mode of the current prediction unit and a size of the current prediction unit; and a prediction block generating unit configured to generate a prediction block of the current prediction unit using the reference pixels corresponding to the restored intra prediction mode.

An apparatus generates reference pixels and adaptively filters the reference pixels in order to generate a prediction block
minimizing the difference between the prediction block and an original block. Also, by adaptively filtering the prediction block according to intra prediction mode, residual signals become smaller and thus an image compression can be improved.FIG. 1 is a block diagram illustrating a moving picture coding apparatus.FIG. 2 is a flow chart illustrating an operation of a scanning unit.FIG. 3 is a block diagram illustrating a moving picture decoding apparatus.FIG. 4 is a block diagram illustrating an intra prediction unit.FIG. 5 is a conceptual diagram showing positions of reference pixels used for intra prediction.FIG. 6 a flow chart illustrating a process of generating reference pixels.FIG. 7 is a block diagram illustrating an intra prediction unit of a moving picture decoding apparatus.
Hereinafter, various embodiments of the present invention will be described in detail with reference to the accompanying drawings. However, the present invention is not limited to the exemplary embodiments disclosed below, but can be implemented in various types. Therefore, many other modifications and variations of the present invention are possible, and it is to be understood that within the scope of the appended claims, the present invention may be practiced otherwise than as has been specifically described.

For image coding, each picture consists of a plurality of slices, and each slice consists of a plurality of coding units. Since an image of a high-definition (HD) grade or higher has many smooth regions, an image compression can be improved by encoding the image with coding units of larger than an MB of which size is 16x16.

A size of the coding unit according to the present invention may be 16x16, 32x32 or 64x64. A size of the coding unit may also be 8x8 or less. A coding unit of the largest size is referred to as a super macroblock (SMB). A size of SMB is indicated by a smallest size of the coding unit and depth information. The depth information indicates a difference value between the size of SMB and the smallest size of the coding unit.

Therefore, coding units to be used for coding pictures may be SMB or sub-block of SMB. The coding units are set to defaults value or are indicated in a sequence header.

A SMB consists of one or more coding units. The SMB has a form of a recursive coding tree so as to include the coding units and a division structure of the coding units. When the SMB is not divided into four sub-coding units, the coding tree may consist of information indicating that the SMB is not divided and one coding unit. When the SMB is divided into four sub-coding units, the coding tree may consist of information indicating that the SMB is divided and four sub-coding trees. Likewise, each sub-coding tree has the same structure as the SMB. However, a coding unit of the smallest coding unit (SCU) size is not divided into sub-coding units.

Meanwhile, each coding unit in the coding tree is subjected to intra prediction or inter prediction in units of the coding unit itself or a sub-block. A unit in which the intra prediction or the inter prediction is performed is referred to as a prediction unit. A size of the prediction unit may be 2N×2N or N×N for intra prediction. A size of the prediction unit may be 2N×2N, 2N×N, N×2N or N×N for inter prediction. Here, 2N denotes horizontal and vertical lengths of a coding unit.

A coding unit includes a prediction mode of the prediction unit and size information (partmode) on the prediction unit. To improve coding efficiency, the prediction mode and the size information may be combined and joint-coded. In this case, each coding unit includes a joint-coded prediction type (pred type).

A coding unit includes one or more additional information container. Each additional information container contains additional information required for generating a prediction block of each prediction unit. In intra prediction, the additional information includes encoded intra prediction information. In inter prediction, the additional information includes encoded motion information. The motion information includes a motion vector and a reference picture index.

A coding unit also includes a residual signal container for residual signals of the coding unit. The residual signal container contains one transform tree, one luminance residual signal container and two chrominance residual signal containers. The transform tree indicates whether the residual signals of the transform units in the residual signal container exist or not. The residual signal container consists of a recursive tree structure. The residual signal container for the coding unit is exampled. If the coding unit is not divided into four sub-coding unit, the residual signal container contains quantization information (residual quantization parameter) and an encoded residual signal. If the coding unit is divided into four sub-coding unit, the residual signal container contains quantization information and four residual signal sub-containers. Each residual signal sub-container has same structure of the residual signal container of the coding unit, but does not contain the quantization information.

Meanwhile, only a case that the coding unit is equally divided into prediction units is described. However, when the above-described equal division is used for an image that has a boundary in a specific direction or at a specific position according to a characteristic, different prediction units are used for similar pieces of data at the boundary, and a residual signal cannot be effectively reduced.

In this case, for compressing a residual signal, it may be more effective to divide SMB or MB in a specific direction according to a shape of the boundary of the image and perform intra or inter prediction.

The simplest adaptive mode is to divide a coding unit into two blocks using a straight line so as to extract statistical dependency of a prediction region on local topography. A boundary of an image is matched to straight line and divided. In this case, dividable directions may be limited to a predetermined number. For example, a method of dividing a block may be limited to four directions of horizontal, vertical, upward diagonal and downward diagonal directions. Also, the division may be limited to the horizontal and vertical directions only. The number of dividable directions can be three, five, seven and so on. The number of dividable directions may vary according to a size of the coding block. For example, for a coding unit of a large size, the number of dividable directions may be relatively increased.

In inter prediction, when one coding unit is divided into two prediction units for more adaptive prediction, motion estimation and motion compensation should be performed on each of prediction units. Motion information for each prediction unit is derived, and a residual signal between a prediction block derived from the motion information for each prediction unit is encoded.

After obtaining residual signals for the respective two prediction blocks divided from one coding unit, the two residual signals may be added to generate one residual signal for one cording unit. The residual signal for one cording unit is transformed and encoded. In this case, it is a high possibility that there will be difference between overall distributions of the residual signals of the respective two prediction blocks with the center of the boundary, and thus a residual signal of one coding unit can be generated by multiplying a value of any one region by a predetermined value. Also, boundary region of the two residual signals may be caused to overlap, and smoothing may be performed on the overlapping boundary region to generate one residual signal.

In another method, a block may be generated by performing padding according to respective division regions of the block, and encoded. In other words, when a current division region is encoded among the two division regions, one block may be configured by padding another division region constituting the block with a value of the current division region, and then subjected to two-dimensional (2D) transform coding.

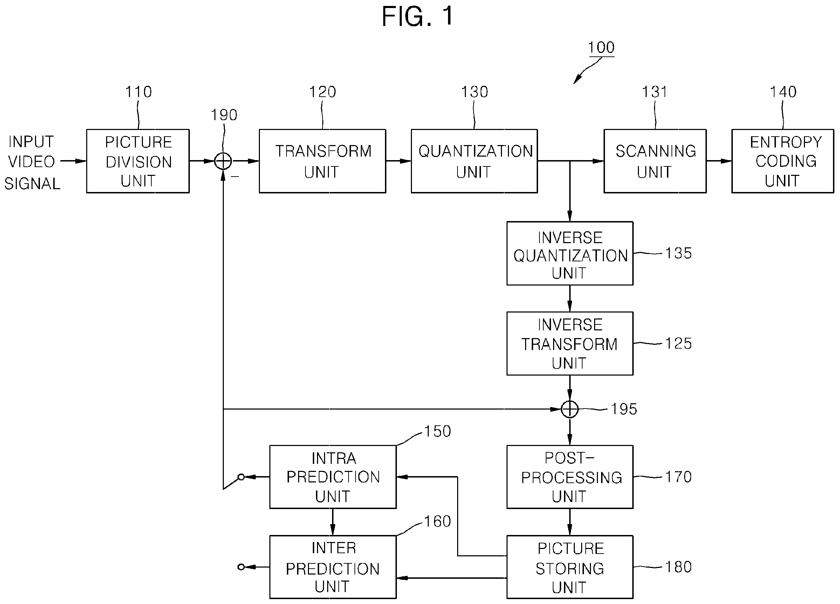

FIG. 1 is a block diagram illustrating a moving picture coding apparatus according to the present invention.

Referring to FIG. 1, a moving picture coding apparatus 100 according to the present invention includes a picture division unit 110, a transform unit 120, a quantization unit 130, a scanning unit 131, an entropy coding unit 140, an intra prediction unit 150, an inter prediction unit 160, an inverse quantization unit 135, an inverse transform unit 125, a post-processing unit 170, a picture storing unit 180, a subtracter 190 and an adder 195.

The picture division unit 110 analyzes an input video signal to divide each largest coding unit (LCU) of a picture into coding units each of which has a predetermined size, determine prediction mode of each coding unit, and determines size of prediction unit per each coding unit. The picture division unit 110 sends the prediction unit to be encoded to the intra prediction unit 150 or the inter prediction unit 160 according to the prediction mode. Also, the picture division unit 110 sends the prediction units to be encoded to the subtracter 190.

The transform unit 120 transforms a residual block. The residual block consists of a residual signal between an original block inputted and a prediction block generated by the intra prediction unit 150 or the inter prediction unit 160. The residual block may consist of a coding unit. The residual block consisting of a coding unit is divided into optimal transform units and transformed. A transform matrix type may be adaptively determined according to a prediction mode (intra or inter). Also, a residual signal of intra prediction has directivity according to an intra prediction mode, and thus a transform matrix may be adaptively determined according to the intra prediction mode. The transform unit may be transformed by two (horizontal and vertical) one-dimensional (1D) transform matrices. In inter prediction, one predetermined transform matrix type is determined. In intra prediction, there is a high possibility that the residual block will have vertical directivity when the intra prediction mode is horizontal. Thus, a discrete cosine transform (DCT) based integer matrix is applied to the vertical direction, and a discrete sine transform (DST) or Karhunen Loève transform (KLT) based integer matrix is applied to the horizontal direction. When the intra prediction mode is vertical, a DST or KLT based integer matrix is applied to the vertical direction, and a DCT based integer matrix is applied to the horizontal direction. Also, in intra prediction, the transform matrix may be adaptively determined according to a size of the transform units.

The quantization unit 130 determines a quantization step size for quantizing coefficients of the transformed residual block. The quantization step size is determined per coding unit of a predetermined size or more. The predetermined size may be 8×8 or 16×16. Using the determined quantization step size and a quantization matrix determined by a prediction mode, the coefficients of the transform block are quantized. The quantization unit 130 uses quantization step sizes of coding units adjacent to a current coding unit as a quantization step size predictor of the current coding unit. The quantization unit 130 sequentially retrieves coding units in the following scan order; a left coding unit of the current coding unit, an above coding unit of the current coding unit, and an above left coding unit of the current coding unit. Then, the quantization unit 130 generates the quantization step size predictor of the current coding unit using one or two valid quantization step sizes. For example, the first valid quantization step size encountered in the scan order may be determined as the quantization step size predictor. An average of two valid quantization step size retrieved in the scan order may be determined as the quantization step size predictor, and one valid quantization step size is determined as the quantization step size predictor when only the one quantization step size is valid. When the quantization step size predictor is determined, a difference between the quantization step size and the quantization step size predictor is transmitted to the entropy coding unit 140.

When a slice is divided into coding units, there may be none of a left coding unit, an above coding unit and an above left coding unit of the current coding unit. But, there may be a previous coding unit of the current coding unit in the coding order in the maximum coding unit. Thus, coding units adjacent to the current coding unit and the previous coding unit of the current coding unit in the coding order in the maximum coding unit may be candidates. In this case, the above scan order may be changed to the following scan order; 1) the left coding unit of the current coding unit, 2) the above coding unit of the current coding unit, 3) the above left coding unit of the current coding unit and 4) the previous coding unit of the current coding unit. The scan order may be changed, or the above left coding unit may be omitted in the scan order.

The quantized transform block is provided to the inverse quantization unit 135 and the scanning unit 131.

The scanning unit 131 scans the coefficients of the quantized transform block, thereby converting the coefficients into 1D quantized coefficients. Since distribution of the coefficients of the transform block after quantization may be dependent on an intra prediction mode, a coefficient scanning pattern is determined according to the intra prediction mode. The coefficient scanning pattern may also be determined according to the size of the transform unit.

The inverse quantization unit 135 inversely quantizes the quantized coefficients. The inverse transform unit 125 restores a residual block of the spatial domain from the inversely quantized transform coefficients. The adder 195 generates a reconstructed block by adding the residual block reconstructed by the inverse transform unit 125 and the prediction block from the intra prediction unit 150 or the inter prediction unit 160.

The post-processing unit 170 performs a de-blocking filtering process for removing blocking artifact generated in a reconstructed picture, an adaptive offset application process for complementing a difference between the reconstructed picture and the original image per pixel, and an adaptive loop filter process for complementing a difference between the reconstructed picture and the original image in a coding unit.

The de-blocking filtering process may be applied to a boundary between prediction units having a predetermined size or more and a boundary between transform units. The predetermined size may be 8×8. The de-blocking filtering process includes a step of determining a boundary to be filtered, a step of determining boundary filtering strength to be applied to the boundary, a step of determining whether or not to apply a de-blocking filter, and a step of selecting a filter to be applied to the boundary when it is determined to apply the de-blocking filter.

Whether or not to apply the de-blocking filter is determined according to i) whether or not the boundary filtering strength is greater than 0 and ii) whether or not a value indicating the difference between boundary pixels of P block and Q block is smaller than a first reference value determined according to a quantization parameter.

Two or more filters may exist. When an absolute value of a difference between two pixels adjacent to the block boundary is equal to or larger than a second reference value, a weak filter is selected. The second reference value is determined by the quantization parameter and the boundary filtering strength.

The adaptive offset application process is intended to reduce a difference (distortion) between a pixel subjected to the de-blocking filter and the original pixel. It may be determined whether or not to perform the adaptive offset application process according to pictures or slices. A picture or slice may be divided into a plurality of offset regions, and an offset mode may be determined per the offset region. There may be four edge offset modes and two band offset modes. In the case of an edge offset type, an edge type to which each pixel belongs is determined, and an offset corresponding to the edge type is applied. The edge type is determined on the basis of distribution of two values of pixels adjacent to a current pixel.

The adaptive loop filter process may be performed on the basis of a value obtained by comparing an original image and a reconstructed image to which the de-blocking filtering process or the adaptive offset application process is applied. An adaptive loop filter (ALF) is detected through one Laplacian activity value on the basis of a 4×4 block. The determined ALF can be applied to all pixels included in a 4×4 block or an 8×8 block. Whether or not to apply an ALF may be determined according to coding units. A size and coefficients of a loop filter may vary according to each coding unit. A slice header may include information indicating whether or not to apply the ALF to each coding unit, filter coefficient information and filter shape information, and so on. In the case of chrominance components, whether or not to apply the ALF may be determined in picture units. Unlike luminance, the loop filter may have a rectangular shape.

The picture storing unit 180 receives post-processed image data from the post-processing unit 160, and stores the image in picture units. A picture may be an image in a frame or a field. The picture storing unit 180 has a buffer (not shown) capable of storing a plurality of pictures.

The inter prediction unit 160 performs motion estimation using one or more reference pictures stored in the picture storing unit 180, and determines reference picture indexes indicating the reference pictures and motion vectors. According to the reference picture index and the motion vector, the inter prediction unit 160 extracts a prediction block corresponding to a prediction unit to be encoded from a reference picture selected among a plurality of reference pictures stored in the picture storing unit 180 and outputs the extracted prediction block.

The intra prediction unit 150 performs intra prediction using reconstructed pixel values within a current picture. The intra prediction unit 150 receives the current prediction unit to be predictively encoded, selects one of a predetermined number of intra prediction modes, and performs intra prediction. The predetermined number of intra prediction modes may depend on the size of the current prediction unit. The intra prediction unit adaptively filters the reference pixels to generate the intra prediction block. When some of reference pixels are not available, it is possible to generate the reference pixels at the unavailable positions using one or more available reference pixels.

The entropy coding unit 140 entropy-codes the quantized coefficients quantized by the quantization unit 130, intra prediction information received from the intra prediction unit 150, motion information received from the inter prediction unit 160, and so on.

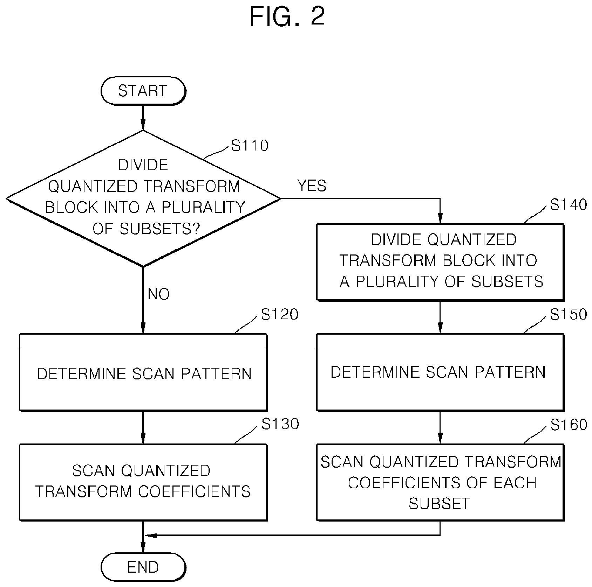

FIG. 2 is a flow chart illustrating an operation of the scanning unit 131 according to the present invention.

It is determined whether the current quantized coefficients block is divided into a plurality of subsets (S110). The determination is based on a size of the current transform unit. If the size of the current transform unit is larger than a first reference size, the encoded quantized coefficients are divided into a plurality of subsets. The first reference size may be 4x4 or 8x8. The first reference size may be transmitted to a decoder by a picture header or a slice header.

When the quantized coefficients block is not divided into a plurality of subsets, a scan pattern to be applied to the quantized coefficients block is determined (S120). The step S120 may be performed prior to the step S110 or regardless of the step S110.

The quantized coefficients of the quantized coefficients block are scanned according to the determined scan pattern (S130). The scan pattern is adaptively determined according to the prediction mode and the intra prediction mode. In inter prediction mode, only one predetermined scan pattern (for example, zigzag scan) can be applied. In intra prediction mode, a scan pattern determined according to the intra prediction mode may be applied. Also, one of a predetermined number of scan patterns may be selected to scan the coefficients, and scan pattern information may be transmitted to the decoder. In intra prediction mode, a scan pattern determined according to the intra prediction mode may be applied. For example, a horizontal scan is applied to a vertical intra prediction mode and a predetermined number of intra prediction modes adjacent to the vertical intra prediction mode. A vertical scan is applied to a horizontal intra prediction mode and a predetermined number of intra prediction modes adjacent to the horizontal intra prediction mode. The predetermined number varies according to a number of allowed intra prediction modes of a prediction unit (or a number of directional intra prediction modes) or a size of a prediction block. For example, if the number of allowable intra prediction modes on the current prediction unit is 16, the predetermined number may be two in each of both directions based on the horizontal or vertical intra prediction mode. If the number of allowable directional intra prediction modes is 33, the predetermined number may be four in each of both directions based on the horizontal or vertical intra prediction mode. Meanwhile, Zigzag scan is applied to non-directional modes. A non-directional mode may be a direct current (DC) mode or a planar mode.

If it is determined that the quantized coefficients block is divided into a plurality of subsets, the quantized coefficients block is divided into a plurality of subsets (S140). The plurality of subsets consist of one main subset and one or more remaining subsets. The main subset is located at an upper left side and covers a DC coefficient, and the one or more remaining subsets cover region other than the main subset.

A scan pattern to be applied to the subsets is determined (S150). The determined scan pattern is applied to all the subsets. The scan pattern is adaptively determined according to the prediction mode and the intra prediction mode. The step S150 may be performed prior to the step S110 or regardless of the step S110.

When the size of the quantized coefficients block (that is, the size of the transform unit) is larger than a second reference size, the zigzag scan pattern may be applied to the quantized coefficients block. The second reference size is, for example, 8x8. Therefore, the step S150 is performed when the first reference size is smaller than the second reference size.

In inter prediction mode, only one predetermined scan pattern (for example, zigzag scan) can be applied to each subset. In intra prediction mode, the scan pattern is adaptively determined as the same as the step S120.

The quantized coefficients in the subsets may be scanned in a reverse direction. In other words, according to the scan pattern, the quantized coefficients other than 0 may be scanned and entropy-coded in the reverse direction beginning with the last quantized coefficient other than 0 in the subsets.

Next, the quantized coefficients of each subset are scanned according to the scan pattern (S160). The quantized coefficients in each subset are scanned in the reverse direction. That is, the quantized transform coefficients are scanned from a last non-zero coefficient to other non-zero coefficients according to the scan pattern, and entropy-coded.

Next, the quantized coefficients of each subset are scanned according to the scan pattern (S160). The quantized coefficients in each subset are scanned in the reverse direction. That is, the quantized transform coefficients are scanned from a last non-zero coefficient to other non-zero coefficients according to the scan pattern, and entropy-coded.

The zigzag scan may be applied to scan the subsets. The subsets may be scanned beginning with the main subset to the remaining subsets in a forward direction, or can be scanned in the reverse direction. A scan pattern for scanning the subsets may be set the same as a scan pattern for scanning the quantized coefficients in the subsets.

The moving picture coding apparatus 100 according to the present invention transmits information capable of indicating a position of the last non-zero quantized coefficient of the transform unit to a decoder. The moving picture coding apparatus 100 also transmits information capable of indicating a position of the last non-zero quantized coefficient in each subset to the decoder.

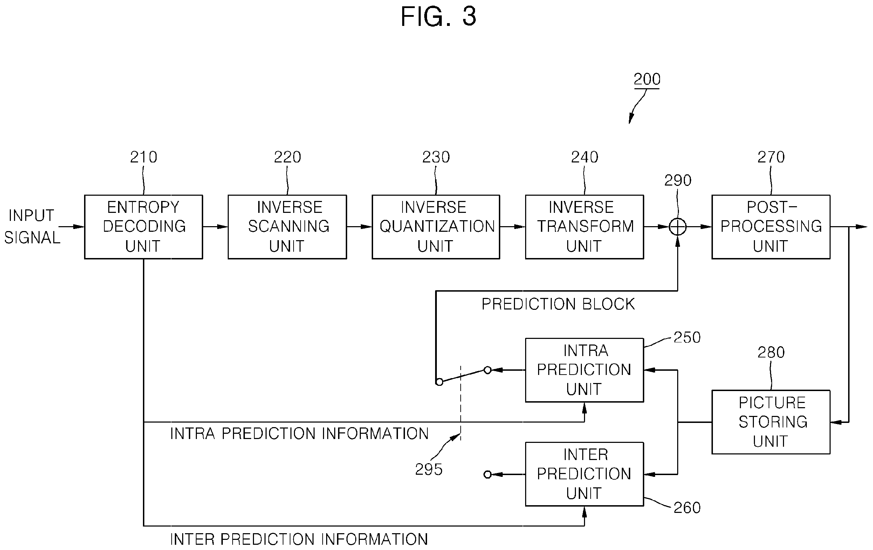

FIG. 3 is a block diagram illustrating a moving picture decoding apparatus.

The moving picture decoding apparatus includes an entropy decoding unit 210, an inverse scanning unit 220, an inverse quantization unit 230, an inverse transform unit 240, an intra prediction unit 250, an inter prediction unit 260, a post-processing unit 270, a picture storing unit 280, an adder 290 and a switch 295.

The entropy decoding unit 210 extracts intra prediction information, inter prediction information and quantized coefficients information from a received bit stream. The entropy decoding unit 210 transmits the inter prediction information to patterns is selected for the conversion. The inverse scan pattern is selected based on at least one of the prediction mode and the intra prediction mode. An operation of the inverse scanning unit 220 is the same as the inverse operation of the scanning unit 131 of FIG. 1. For example, if a size of a current transform unit to be decoded is larger than the first reference size, each subset are inversely scanned according to the selected inverse scan pattern and an inverse quantized block having a size of the transform unit is generated using the plurality of subsets inversely scanned.

The inverse quantization unit 230 determines a quantization step size predictor of the current coding unit. The operation to determine the quantization step size predictor is same as the procedure of the quantization unit 130 of FIG. 1. The inverse quantization unit adds the determined quantization step size predictor and a received residual quantization step size to generate a quantization step size of the current coding unit. The inverse quantization unit 230 restores inverse quantized coefficients using a quantization matrix determined by the quantization step size. The quantization matrix varies according to the size of the current block to be restored. The quantization matrix may be selected for a block having the same size on the basis of at least one of a prediction mode and an intra prediction mode of the current block.

The inverse transform unit 240 inversely transforms the inverse quantized block to restore a residual block. The inverse transform matrix to be applied to the inverse quantized block is adaptively determined according to the prediction mode (intra or inter) and the intra prediction mode. The determination procedure of the inverse transform matrix is the same as the procedure in the transform unit 120 of FIG. 1.

The adder 290 adds the restored residual block restored by the inverse transform unit 240 and a prediction block generated by the intra prediction unit 250 or the inter prediction unit 260 to generate a reconstructed image block.

The intra prediction unit 250 restores the intra prediction mode of the current block based on the intra prediction information received from the entropy decoding unit 210, and generates a prediction block according to the restored intra prediction mode.

The inter prediction unit 260 restores reference picture indexes and motion vectors based on the inter prediction information received from the entropy decoding unit 210, and generated a prediction block using the reference picture indexes and the motion vectors. When motion compensation with fractional precision is applied, the prediction block is generated using an interpolation filter.

The post-processing unit 270 operates the same as the post-processing unit 160 of FIG. 1

The picture storing unit 280 stores the post-processed reconstructed image by the post-processing unit 270.

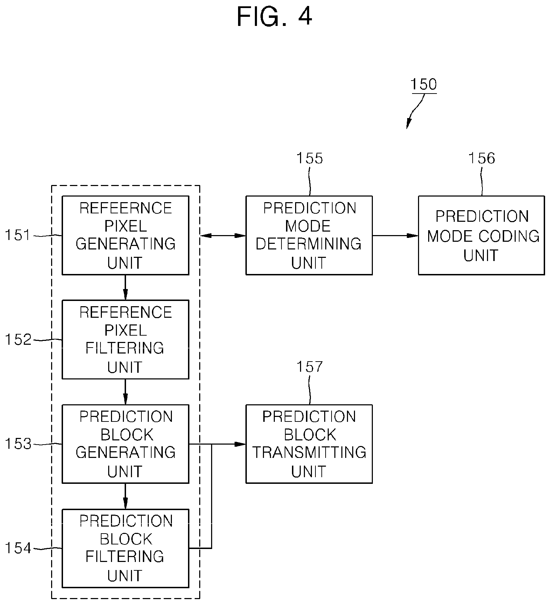

FIG. 4 is a block diagram illustrating the intra prediction unit 150 of a moving picture coding unit 100 according to the present invention.

Referring to FIG. 4, the intra prediction unit 150 includes a reference pixel generating unit 151, a reference pixel filtering unit 152, a prediction block generating unit 153, a prediction block filtering unit 154, a prediction mode determining unit 155 and a prediction mode coding unit 156 and a prediction block transmitting unit 157.

The reference pixel generating unit 151 determines that it is necessary to generate reference pixels for intra prediction, and generates reference pixels if it is necessary to generate the reference pixels.

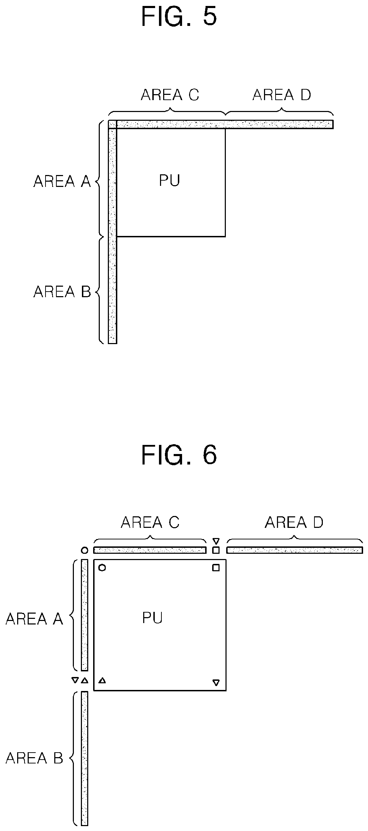

FIG. 5 is a conceptual diagram showing positions of reference pixels used for intra prediction according to the present invention. As shown in FIG. 5, the reference pixels consist of above reference pixels, left reference pixels and a corner reference pixel of the current prediction unit. The above reference pixels of the current prediction unit are pixels (regions C and D) present over double the width of the current prediction unit, and the left reference pixels of the current prediction unit are pixels (regions A and B) present over double the height of the current prediction unit.

The reference pixel generating unit 151 determines whether the reference pixels are available or not. If one or more reference pixels are not available, the reference pixel generation unit 151 generates reference pixels at the unavailable positions using available reference pixel.

First, a case in which all reference pixels in any one of upper and left regions of a current prediction unit to be encoded are unavailable will be described.

For example, when the current prediction unit is located at the upper boundary of a picture or a slice, the above reference pixels (regions C and D) and the corner reference pixel of the current prediction unit do not exist. When the current prediction unit is located at the left boundary of a picture or a slice, the left reference pixels (regions A and B) and the corner reference pixel do not exist. In those cases, reference pixels are generated by copying the value of an available pixel closest to the unavailable pixel. That is, when the current prediction unit is located at the upper boundary of a picture or a slice, the above reference pixels can be generated by copying the uppermost left reference pixel (that is, a reference pixel located in the uppermost position of region A). When the current prediction unit is located at the left boundary of a picture or a slice, the left reference pixels can be generated by copying the leftmost above reference pixel (that is, a reference pixel located in the leftmost position of region C). The above-mentioned method is applied by default, but the method may vary per sequence, picture or slice if necessary.

Next, a case in which some of reference pixels in an above or left reference pixels of a current prediction unit to be encoded are unavailable will be described. There are two cases in which 1) available reference pixels are present in only one direction with respect to the unavailable reference pixels, and 2) available reference pixels are present in both directions with respect to the unavailable reference pixels.

Case 1) will be described.

For example, when the current block is located at the right boundary of a picture or a slice or a LCU, the reference pixels covering area D are not available. Also, when the current block is located at the below boundary of a picture or a slice or a LCU, the reference pixels covering area B are not available. In this case, the reference pixels are generated by copying the values of available pixels closest to the unavailable pixel. Also, the reference pixels are generated using two or more available pixels closest to the unavailable pixel.

Case 2) will be described.

For example, when the current block is located at the upper boundary of a slice and the above left block of the current block is available, the reference pixels covering area C are not available, but the reference pixels covering areas A and D are available. When available reference pixels are thus present in both directions, one available reference pixel present at the closest position in each direction is selected, and reference pixels at the unavailable positions are generated using the selected reference pixels (i.e., the uppermost reference pixel in region A and the leftmost reference pixel in region D).

A value obtained by rounding off an average of the two reference pixels (pixels present at the closest positions in the respective directions) may be generated as a reference pixel value. However, when an unavailable reference pixel region is large, there is a high possibility that a step difference will occur between an available pixel and a generated pixel, and thus it is useful to generate reference pixels using linear interpolation. Specifically, in consideration of a position with respect to two available reference pixels, an unavailable reference pixel at the current position can be generated.

Next, a case in which all reference pixels in above and left sides of a current prediction unit to be encoded are unavailable will be described. For example, when a current prediction unit is adjacent to a left upper boundary of a picture or a slice, there are no available reference pixels.

In this case, some or all reference pixels can be generated using two or more pixels present in the current prediction unit. The number of pixels that are present in the current prediction unit and used for generating the reference pixels may be two or three.

FIG. 6 is a flow chart illustrating a process of generating reference pixels according to the present invention.

Referring to FIG. 6, the process of generating reference pixels using two pixels is as follows. A left above pixel ○ and one of a right above pixel □, a left below pixel Δ and a right below pixel ∇ of the current prediction unit may be used. When the left above pixel ○ and the right above pixel □ of the current prediction unit are used, the left above pixel and the right above pixel are copied to the corresponding positions on a upper side and the right above pixel and the copied reference pixels are used to generate reference pixels covering area C. The reference pixels are generated using an average or linear interpolation. The reference pixels covering D are generated by copying the right above pixel □ or by using a plurality of the generated above pixels. When the left above pixel ○ and the left below pixel Δ of the current prediction unit are used, the same method is applied. When the left above pixel ○ and the right below pixel ∇ are used, the right below pixel ∇ is copied to the corresponding reference pixel position in horizontal direction and vertical direction and then the residual reference pixels are generated as the same as described above.

The process of generating reference pixels using three pixels is as follows. A left above pixel ○, a right above pixel □ and a left below pixel Δ of the current prediction unit may be used. The pixels are copied to the corresponding reference pixel position and then the residual reference pixels are generated using the copied pixels. The residual reference pixels are generated as the same as described above.

Meanwhile, when a method as described above is used, the values of the pixels used to generate the reference pixels are transmitted to the decoder. To minimize the amount of bits to be transmitted, the value of the left above pixel ○ and the difference between the value of the left above pixel ○ and the values of other pixels. The value of the left above pixel may be a quantized value or be entropy-coded.

When a slice type is intra (I), it is more effective to generate the reference pixels using two or more pixels.

Another method of generating reference pixels when all reference pixels in upper and left sides of a current prediction unit to be encoded are unavailable will be described. This method is effective when a slice type is not intra (I).

First, it is determined whether pixels are present at the same positions as reference pixels of a current prediction unit in a reference picture encoded previously to a current block. When pixels are present, the pixels in the reference picture are copied to generate reference pixels of the current prediction unit.

When pixels are not present, it is determined whether pixels are present at the closest positions (1 pixel apart) to reference pixels of the current prediction unit. When pixels are present, the pixels are copied and used as the reference pixels of the current prediction unit.

The reference pixel filtering unit 152 adaptively filters reference pixels of the current prediction unit. Low-pass filter is applied to smooth a variance of pixel values between the reference pixels. The low-pass filter may be a 3-tap filter [1, 2, 1] or a 5-tap filter [1, 2, 4, 2, 1].

The filter may be adaptively applied according to a size of the current block. If the size of the current block is equal to or smaller than a predetermined size, the filter may not be applied. The predetermined size may be 4x4.

The filter may also be adaptively applied according to a size of the current block and intra prediction mode.

If intra prediction mode is the horizontal mode or the vertical mode, pixels of a prediction block are generated using one reference pixel. Therefore, a filter is not applied in the horizontal mode and the vertical mode. In the DC mode, a prediction pixel is generated using average of the reference pixels. Therefore, a filter is not applied in the DC mode because the prediction pixel is not affected by the difference between the reference pixels.

In the intra prediction mode 3, 6 or 9 having a direction of 45° with reference to the horizontal or vertical direction, a filter is applied regardless of the size of the prediction unit or applied when the current block is larger than a smallest prediction unit. A first filter may be applied to a prediction unit having a size smaller that a predetermined size, and a second filter stronger than the first filter may be applied to a prediction unit having a size equal to or larger than the predetermined size. The predetermined size may be 16x16.

In the intra prediction modes other than the vertical mode, the horizontal mode, the DC mode and the intra prediction mode 3, 6 and 9, a filter may be adaptively applied according to the size of the current prediction unit and the intra prediction mode. However, in the planar mode, filtering of reference pixels may be performed.

Also, the filter may not be applied to some or all reference pixels generated through linear combination.

The prediction block generating unit 153 generates a prediction block corresponding to the intra prediction mode. The prediction block is generated using the reference pixels or linear combination of the reference pixels based on the intra prediction mode. The reference pixels to be used to generate the prediction block may be filtered by the reference pixel filtering unit 152.

The prediction block filtering unit 154 adaptively filters the generated prediction block according to the intra prediction mode to minimize the residual signal between the prediction block and the current block to be encoded. The difference between a reference pixel and a prediction pixel adjacent to the reference pixel varies according to the intra prediction mode. Therefore, filtering of the prediction pixel adjacent to the reference pixel enables the difference to be decreased.

In the DC mode, the prediction block consists of averages of reference pixels, and a step difference may occur between pixels in a prediction block adjacent to the reference pixels. Therefore, the prediction pixels of upper line and left line which are adjacent to the reference pixels are filtered using the reference pixels. The upper left prediction pixel adjacent two reference pixels (the upper reference pixel and the left reference pixel) is filtered by 3-tap filter. The other prediction pixels (pixels of upper line and pixels of left line in the prediction block) and adjacent to one reference pixel are filtered by 2-tap filter.

The prediction block filtering unit 154 may be integrated into the prediction block generating unit 153. Also, a prediction block may be generated to bring about effects of the prediction block filtering. In this case, the prediction block is generated by using the combination of the generating operation and the filtering operation.

The intra prediction mode determining unit 155 determines the intra prediction mode of a current prediction unit using reference pixels. The intra prediction mode determining unit 155 selects one intra prediction mode in which the amount of coding bits of a residual block is minimized as the intra prediction mode of the current prediction unit. To generate a residual block, a prediction block is generated according to each intra prediction mode. The prediction block may be generated by using the reference pixels filtered by the reference pixel filtering unit 152 or may be a block filtered by the prediction block filtering unit 154.

The prediction block transmitting unit 157 transmits the prediction block generated based on the intra prediction mode by the prediction mode determining unit 155 to the subtracter 190.

The prediction mode coding unit 156 encodes the intra prediction mode of the current prediction unit determined by the intra prediction mode determining unit 155. The intra prediction mode coding unit 156 may be integrated into the intra prediction unit 150 or into the entropy coding unit 140.

The prediction mode coding unit 156 encodes the intra prediction mode of the current prediction unit using an above intra prediction mode of the current prediction unit and a left intra prediction mode of the current prediction unit.

First, the above intra prediction mode and the left intra prediction mode of the current prediction unit are derived. When there exist a plurality of above prediction units of the current prediction unit, the plurality of above prediction units are scanned in a predetermined direction (for example, from right to left) to determine the intra prediction mode of a first available prediction unit as an above intra prediction mode. Also, when there exist a plurality of left prediction units of the current prediction unit, the plurality of left prediction units are scanned in a predetermined direction (for example, from bottom to top) to determine the intra prediction mode of a first available prediction unit as a left intra prediction mode. Alternatively, among a plurality of available prediction units, the intra prediction mode of an available prediction unit having the lowest intra prediction mode number may be set as an above intra prediction mode.

When the above intra prediction mode or the left intra prediction mode is not available, the DC mode (mode 2) may be set to as the above intra prediction mode or the left intra prediction mode. The above intra prediction mode or the left intra prediction mode is treated as unavailable when there does not exist a corresponding prediction unit.

Next, the above intra prediction mode or the left intra prediction mode is converted into one of the predetermined number of intra prediction modes when the above intra prediction mode number or the left intra prediction mode number is equal to or greater than the number of intra prediction modes permissible for the current prediction unit. The predetermined number may vary according to a size of the current prediction unit. For example, when the size of the current prediction unit is 4×4, the intra prediction mode is converted into one of nine modes (mode 0 to mode 8), and when the size of the current prediction unit is 64×64, the intra prediction mode is mapped into one of three modes (mode 0 to mode 2). The intra prediction mode may be converted into one of the intra prediction modes permissible for the current prediction unit.

Next, if the intra prediction mode of the current prediction unit is the same as any one of the above and left intra prediction modes, a flag indicating that the intra prediction mode of the current prediction unit is the same as any one of the above and left intra prediction modes and a flag indicating one of the above and left intra prediction modes are transmitted to the decoder. In this case, if the above and left intra prediction modes are same, the flag indicating one of the above and left intra prediction modes can be omitted. Also, if only one of the above and left intra prediction modes is available and the available intra prediction mode is same with the intra prediction mode of the current prediction block, the flag indicating one of the above and left intra prediction modes can be omitted.

But, if the intra prediction mode of the current prediction unit is not the same as any one of the above and left intra prediction modes, the intra prediction mode number of the current prediction unit is compared with the above intra prediction mode number and the left intra prediction mode number. The number of cases in which the left or upper intra prediction mode numbers is not greater than the intra prediction mode number of the current prediction unit is calculated, and a value obtained by subtracting the number of cases from the intra prediction mode number of the current prediction unit is determined as a final intra prediction mode number of the current prediction unit to be transmitted. Here, when the left and upper intra prediction mode numbers are identical, the left and upper intra prediction modes are regarded as one.

According to whether or not the upper and left intra prediction modes are identical, a table for entropy-coding the determined final intra prediction mode is determined.

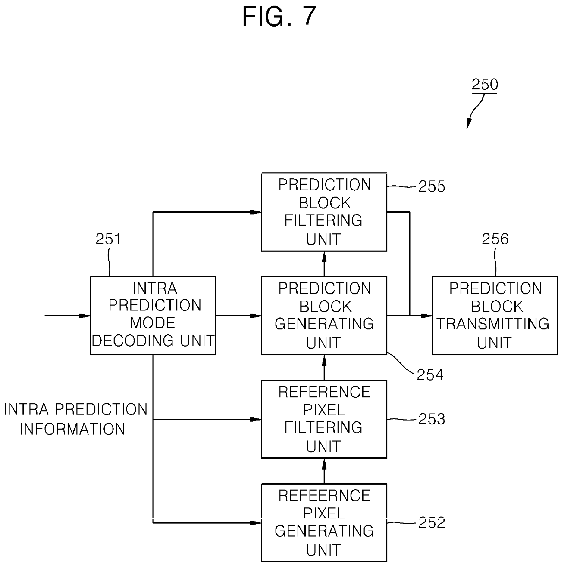

FIG. 7 is a block diagram illustrating the intra prediction unit 250 of a moving picture decoding apparatus 200.

The intra prediction unit 250 includes a prediction mode decoding unit 251, a reference pixel generating unit 252, a reference pixel filtering unit 253, a prediction block generating unit 254, a prediction block filtering unit 255 and a prediction block transmitting unit 256.

The prediction mode decoding unit 251 restores the intra prediction mode of a current prediction unit as follows.

First, the prediction mode decoding unit 251 receives additional information included in the additional information container for generating a prediction block. The additional information includes a prediction flag and residual prediction information. The prediction flag indicates whether the intra prediction mode of the current prediction unit is the same as one of intra prediction modes of adjacent prediction units. The residual prediction information includes information determined by the prediction flag. If the prediction flag is 1, the residual prediction information may include an index of the intra prediction mode candidate. The index of the intra prediction mode designates the intra prediction mode candidate. If the prediction flag is 0, the residual information may include residual intra prediction mode number.

Intra prediction mode candidates of the current prediction unit are derived. The intra prediction mode candidates are derived using intra prediction modes of adjacent prediction units. For convenience, a case in which the intra prediction mode candidate of the current prediction unit are limited to upper and left intra prediction modes will be described. When there are a plurality of above prediction units or a plurality of left prediction units, the intra prediction mode of the above or left prediction unit is determined as the same as described in the operation of the intra prediction encoding unit 156 of the coding apparatus 100. Also, when the mode number of an available intra prediction mode candidate is equal to or greater than the number of intra prediction modes permissible for the current prediction unit, the available intra prediction mode candidate is converted into one of the permissible modes for the current prediction unit as described in the intra prediction encoding unit 156.

Next, when the received prediction flag indicates that the current prediction unit has the same intra prediction mode as an adjacent prediction unit, and there is the prediction mode candidate index, a prediction mode indicated by the prediction mode candidate index is determined as the intra prediction mode of the current prediction unit.

If the received prediction flag indicates that the current prediction unit has the same intra prediction mode as an adjacent prediction unit, but there is no prediction mode candidate index and one available intra prediction mode of the adjacent prediction unit, the available intra prediction mode is restored to the intra prediction mode of the current prediction unit.

If the received prediction flag indicates that the current prediction unit does not have the same intra prediction mode as an adjacent prediction unit, a received residual intra prediction mode value is compared with intra prediction mode numbers of the available intra prediction mode candidates to restore the intra prediction mode of the current prediction unit.

The reference pixel generating unit 252 generates reference pixels using the same method as described in the reference pixel generating unit 151 of the coding apparatus 100. However, the reference pixel generator 252 is different from the reference pixel generator 151 of the coding apparatus 100 in that it adaptively generates reference pixels according to the intra prediction mode restored by the prediction mode decoder 251. That is, the reference pixel generating unit 252 may generate reference pixels only when the reference pixels used for generating a prediction block and determined by the intra prediction mode are not available.

The reference pixel filtering unit 253 adaptively filters the reference pixels based on the intra prediction mode restored by the prediction decoding unit 251 and a size of the prediction block. The filtering condition and a filter are same as those of the reference pixel filtering unit 152 of the coding apparatus 100.

The prediction block generating unit 254 generates a prediction block using the reference pixels according to the intra prediction mode restored by the prediction mode decoding unit 251.

The prediction block filtering unit 255 adaptively filters the prediction block according to the intra prediction mode restored by the prediction mode decoding unit 251. The filtering operation is the same as that of the prediction block filtering unit 154 of the coding apparatus 100.

The prediction block transmitting unit 256 transmits the prediction block received from the prediction block generator 254 or the prediction block filtering unit 255 to the adder 290.

## Claims

1. An apparatus for encoding an image, the apparatus comprising:
an intra prediction unit (150) configured to generate a prediction block corresponding to a current block according to an intra prediction mode selected out of a plurality of intra prediction modes;
a transform unit (120) configured to transform a residual block obtained by calculating a difference between an original block of the current block and the prediction block to generate a transform block;
a quantization unit (130) configured to quantize the transform block to generate a quantized transform block using a quantization step size;
a scanning unit (131) configured to scan quantized transform coefficients of the quantized transform block to generate one-dimensional (1D) quantized transform coefficients; and
an entropy coding unit (140) configured to entropy-code the 1D quantized transform coefficients,
wherein, when a size of the transform block is larger than 4x4, the scanning unit (131) divides the quantized transform coefficients into a plurality of sub-blocks and scans the plurality of sub-blocks and the quantized transform coefficients of each sub-block using a scan pattern determined according to the selected intra prediction mode,
wherein, when the selected intra prediction mode is a horizontal mode, the scan pattern is a vertical scan,
wherein information indicating a position of the last non-zero coefficient of the quantized transform block is transmitted to a decoder, and
wherein the intra prediction unit (150) includes:
a reference pixel generating unit (151) configured to generate reference pixels using available reference pixels of the current block when unavailable reference pixels exist;
a reference pixel filtering unit (152) configured to adaptively filter reference pixels adjacent to the current block based on the selected intra prediction mode and a size of the current block;
a prediction block generating unit (153) configured to generate a prediction block of the current block according to the selected intra prediction mode; and
a prediction block filtering unit (154) configured to adaptively filter some prediction pixels of the prediction block based on the selected intra prediction mode and the size of the current block.

2. The apparatus of claim 1, wherein the quantization unit (130) determines an average of two valid quantization step sizes out of a quantization step size of a left coding unit of a current coding unit, a quantization step size of an above coding unit of the current coding unit and a quantization step size of a previous coding unit of the current coding unit as a quantization step size predictor, and transmits a difference between the quantization step size and the quantization step size predictor to the entropy coding unit (140).

3. The apparatus of claim 1, wherein the plurality of sub-blocks are scanned in a reverse direction.

## Patentansprüche

1. Vorrichtung zum Codieren eines Bildes, wobei die Vorrichtung umfasst:
eine Intra-Prädiktionseinheit (150), die konfiguriert ist, um einen Prädiktionsblock zu erzeugen, der einem aktuellen Block gemäß einem Intra-Prädiktionsmodus entspricht, der aus einer Vielzahl von Intra-Prädiktionsmodi ausgewählt ist;
eine Transformationseinheit (120), die konfiguriert ist, um einen Restblock zu transformieren, der durch Berechnen einer Differenz zwischen einem ursprünglichen Block des aktuellen Blocks und dem Prädiktionsblock erhalten wird, um einen Transformationsblock zu erzeugen;
eine Quantisierungseinheit (130), die konfiguriert ist, um den Transformationsblock zu quantisieren, um einen quantisierten Transformationsblock unter Verwendung einer Quantisierungsschrittweite zu erzeugen;
eine Abtasteinheit (131), die konfiguriert ist, um quantisierte Transformationskoeffizienten des quantisierten Transformationsblocks abzutasten, um eindimensionale (1D) quantisierte Transformationskoeffizienten zu erzeugen; und
eine Entropie-Kodierungseinheit (140), die konfiguriert ist, um die Entropie-Kodierung der 1D-quantisierten Transformationskoeffizienten durchzuführen,
wobei, wenn eine Größe des Transformationsblocks größer als 4x4 ist, die Abtasteinheit (131) die quantisierten Transformationskoeffizienten in eine Vielzahl von Teilblöcken unterteilt und die Vielzahl von Teilblöcken und die quantisierten Transformationskoeffizienten jedes Teilblocks unter Verwendung eines Abtastmusters abtastet, das gemäß dem ausgewählten Intraprädiktionsmodus bestimmt wird,
wobei, wenn der ausgewählte Intraprädiktionsmodus ein horizontaler Modus ist, das Abtastmuster eine vertikale Abtastung ist,
wobei Informationen, die eine Position des letzten ungleich Null-Koeffizienten des quantisierten Transformationsblocks anzeigen, an einen Decoder übertragen werden, und
wobei die Intraprädiktionseinheit (150) Folgendes umfasst:
eine Referenzpixel-Erzeugungseinheit (151), die konfiguriert ist, um Referenzpixel unter Verwendung verfügbarer Referenzpixel des aktuellen Blocks zu erzeugen, wenn nicht verfügbare Referenzpixel vorhanden sind;
eine Referenzpixel-Filtereinheit (152), die konfiguriert ist, um adaptiv Referenzpixel angrenzend an den aktuellen Block basierend auf dem ausgewählten Intraprädiktionsmodus und einer Größe des aktuellen Blocks zu filtern;
eine Prädiktionsblock-Erzeugungseinheit (153), die konfiguriert ist, um einen Prädiktionsblock des aktuellen Blocks gemäß dem ausgewählten Intra-Prädiktionsmodus zu erzeugen; und
eine Prädiktionsblock-Filtereinheit (154), die konfiguriert ist, um einige Prädiktionspixel des Prädiktionsblocks basierend auf dem ausgewählten Intra-Prädiktionsmodus und der Größe des aktuellen Blocks adaptiv zu filtern.

2. Vorrichtung nach Anspruch 1, wobei die Quantisierungseinheit (130) aus einer Quantisierungsschrittgröße einer linken Codiereinheit einer aktuellen Codiereinheit, einer Quantisierungsschrittgröße einer obigen Codiereinheit der aktuellen Codiereinheit und einer Quantisierungsschrittgröße einer vorangegangenen Codiereinheit der aktuellen Codiereinheit als Quantisierungsschrittgrößenvorhersage einen Durchschnitt von zwei gültigen Quantisierungsschrittgrößen bestimmt und eine Differenz zwischen der Quantisierungsschrittgröße und dem Quantisierungsschrittgrößenvorhersagegerät an die Entropiecodiereinheit (140) überträgt.

3. Vorrichtung nach Anspruch 1, wobei die Vielzahl von Teilblöcken in einer umgekehrten Richtung abgetastet wird.

## Revendications

1. Appareil de codage d'une image, l'appareil comprenant:
une unité de prédiction intra (150) configurée pour générer un bloc de prédiction correspondant au bloc courant selon un mode de prédiction intra sélectionné parmi une pluralité de modes de prédiction intra;
une unité de transformation (120) configurée pour transformer un bloc résiduel obtenu en calculant une différence entre un bloc d'origine du bloc courant et le bloc de prédiction pour générer un bloc de transformation;
une unité de quantification (130) configurée pour quantifier le bloc de transformation pour générer un bloc de transformation quantifié à l'aide d'une taille de phase de quantification;
une unité de balayage (131) configurée pour balayer des coefficients de transformation quantifiés du bloc de transformation quantifié pour générer des coefficients de transformation quantifiés unidimensionnels (1D); et
une unité de codage entropique (140) configurée pour coder en entropie les coefficients de transformée quantifiés ID,
dans lequel, lorsqu'une taille du bloc de transformée est supérieure à 4x4, l'unité de balayage (131) divise les coefficients de transformée quantifiés en une pluralité de sous-blocs et balaie la pluralité de sous-blocs et les coefficients de transformée quantifiés de chaque sous-bloc en utilisant un motif de balayage déterminé en fonction du mode de prédiction intra sélectionné,
dans lequel, lorsque le mode de prédiction intra sélectionné est un mode horizontal, le motif de balayage est un balayage vertical,
dans lequel une information indiquant une position du dernier coefficient non nul du bloc de transformée est transmise à un décodeur, et
dans lequel l'unité de prédiction intra (150) comprend:
une unité de génération de pixels de référence (151) configurée pour générer des pixels de référence en utilisant des pixels de référence disponibles du bloc actuel lorsqu'il existe des pixels de référence non disponibles;
une unité de filtrage de pixels de référence (152) configurée pour filtrer de manière adaptative les pixels de référence adjacents au bloc courant sur la base du mode de prédiction intra sélectionné et d'une taille du bloc courant;
une unité de génération de bloc de prédiction (153) configurée pour générer un bloc de prédiction du bloc courant conformément au mode de prédiction intra sélectionné;
une unité de filtrage de bloc de prédiction (154) configurée pour filtrer de manière adaptative certains pixels de prédiction du bloc de prédiction sur la base du mode de prédiction intra sélectionné et de la taille du bloc courant.

2. Appareil selon la revendication 1, dans lequel l'unité de quantification (130) détermine une moyenne de deux tailles de pas de quantification valides sur une taille de pas de quantification d'une unité de codage de gauche d'une unité de codage courante, une taille de pas de quantification d'une unité de codage précédente de l'unité de codage courante et une taille de pas de quantification d'une unité de codage précédente de l'unité de codage courante en tant que prédicteur de taille de pas de quantification et transmet une différence entre la taille de pas de quantification et le prédicteur de taille de pas de quantification à l'unité de codage entropique (140).

3. Appareil selon la revendication 1, dans lequel la pluralité de sous-blocs est balayée dans une direction inverse.
